# EUROPEAN PATENT SPECIFICATION

(11) **EP 4 363 704 B1**
(45) Date of publication and mention of the grant of the patent: **25.06.2025**
(21) Application number: 22744307.4
(22) Date of filing: 01.07.2022
(51) Int. Cl.: F02C 7/045, F02K 1/44, F02K 1/82, B64C 1/40

(54) **METHOD FOR MANUFACTURING A CORE FOR A SOUND-ABSORBING PANEL WITH SANDWICH STRUCTURE FOR NOISE REDUCTION IN AN AIRCRAFT**
VERFAHREN ZUR HERSTELLUNG EINES KERNS FÜR EINE SCHALLABSORBIERENDE PLATTE MIT SANDWICHSTRUKTUR ZUR GERÄUSCHMINDERUNG IN EINEM FLUGZEUG
PROCÉDÉ DE FABRICATION D'UNE ÂME POUR PANNEAU INSONORISANT À STRUCTURE SANDWICH POUR LA RÉDUCTION DU BRUIT DANS UN AÉRONEF

(30) Priority: 02.07.2021 IT 202100017474
(43) Date of publication of application: 08.05.2024
(73) Proprietor: Leonardo S.p.A., 00195 Roma (IT)
(72) Inventor: VERCELLESI, Marco Francesco, 20131 MILANO (IT)
(74) Representative: Verdecchia, Valerio
(86) International application number: PCT/IB2022/056144
(87) International publication number: WO 2023/275839

(56) References cited:
- EP-A1- 1 111 584
- EP-A1- 3 636 550
- WO-A1-2020/016520

## Description

The present invention generally relates to a method for manufacturing a core for a sound-absorbing panel with a sandwich structure for reducing noise in an aircraft, as well as such a core and such a sound-absorbing panel having such a core.

It is generally known that sound-absorbing panels are used in aviation, particularly arranged on the engine nacelle around the engine to absorb its dispersed sound power. In general, said sound-absorbing panels have a so-called "sandwich" structure, that is, comprising a pair of outer skins interspersed with a central layer called the core. Typically, the core is made with a honeycomb structure, and the skin facing the engine or noise source is provided with a plurality of holes; in this way, the sound wave may enter the interior of the central layer and remain confined in the volumes of the honeycomb structure, i.e., hexagonal cells, also called resonance chambers.

Such a sound-absorbing panel for aircraft use is known, for example, from European patent EP 2,949,903 B1 or from European patent EP 2,788,601 B1.

A further example is known from international patent application WO 2020/016520 A1.

In the prior art mentioned above, the core has a honeycomb structure, wherein the resonance chambers, or cells, are all the same shape and size, and are, therefore, unable to abate noise over a wide spectrum of frequencies. Indeed, the state of the art of the research focuses exclusively on defining complex core shapes for sound-absorbing panels for multi-frequency noise abatement, typically in the frequency range of 200 to 8000 Hz and even more particularly in the frequency range of 200 to 1500 Hz.

Moreover, in light of the evolution of turbofan engines toward higher and higher dilution ratios, the need arises to abate noise at lower and lower frequencies, and, at the same time, abate noise over an increasingly broad frequency spectrum.

U.S. patent documents US 10,107,139 B1 and US 2020/0103139 A1 describe several possible geometries for the central layer, or the core, of a sound-absorbing panel, but they do not solve the problem of manufacturing said core.

The method for manufacturing cores for sound-absorbing panels presently starts from expanded cores. For example, US 6,830,796 B2 shows a panel having a central layer or a core with honeycomb with hexagonal cells obtained by means of a conventional bonding method with glue distributed in strips, and mechanical expansion. European patent EP 2,017,077 B1 shows the same configuration, but applied to a component made of a composite material and therefore subjected to co-curing. European patents EP 2,631,450 B1 and EP 2,949,903 B1 also show the possibility of improving noise absorption by plasma or ion discharges interacting with acoustic waves within the core cells. European patent EP 2,788,601 B1 also shows that adjacent cells of a honeycomb-shaped core may be connected through apertures that conduct acoustic waves on differentiated paths. Finally, international patent application WO 2020/201951 shows differentiated paths for acoustic waves through microdrillings in the two walls, or skins, that enclose and seal the core.

The manufacturing methods according to the prior art, however, have several disadvantages and many limitations in applicability. Specifically, in a honeycomb-shaped core the cell sizes are constant, and all cells have the same shape; any partitioning membranes must be inserted cell-by-cell individually and glued there; finally, the core has difficulty adapting to complex geometries, particularly when those geometries have small curvature radii.

The object of the present invention is to overcome the drawbacks of the prior art, and thus to provide a method for manufacturing a sound-absorbing panel core for aeronautical application that does not suffer from the drawbacks described above and that is flexible and cheap.

A further object of the invention is to provide a core for a sound-absorbing panel for aeronautical application that is easy to make, inexpensive, and suitable for absorbing noise on many different frequencies distributed along a broad frequency spectrum.

This and other objects are fully achieved according to the present invention by a method for manufacturing a core for a sound-absorbing panel with a sandwich structure for noise reduction in an aircraft as defined in the attached independent claim 1, as well as by a core for a sound-absorbing panel with sandwich structure for noise reduction in an aircraft as defined in the attached independent claim 10.

Advantageous embodiments of the invention are specified in the dependent claims, the content of which is to be understood as an integral and integrating part of the following description.

In summary, the invention is based on the idea of providing a method for manufacturing a core for a sound-absorbing panel with sandwich structure for noise reduction in an aircraft, the method comprising the steps of:
a) providing a plurality of first sheet-shaped partitioning elements, each first partitioning element having a plurality of vertical slits, which extend transversely from a respective first edge of each first partitioning element;
b) providing a plurality of second sheet-shaped partitioning elements, each second partitioning element having a plurality of vertical slits, which extend transversely from a respective first edge of each second partitioning element;
c) arranging the first partitioning elements spaced from each other on a work surface so that the distance between two successive first partitioning elements of the plurality of first partitioning elements is not constant, and so that a second edge of each first partitioning element, opposite to said first edge of each first partitioning element, rests on said work surface; and
d) arranging the second partitioning elements on the first partitioning elements, transversely thereto, so that each vertical slit of the plurality of vertical slits of the second partitioning elements interlocks with a respective vertical slit of the plurality of vertical slits of a respective first partitioning element, so that the first partitioning elements and the second partitioning elements define between them a plurality of cells, each cell being delimited laterally by a pair of opposing first partitioning elements and a pair of opposing second partitioning elements, and obtaining thus said core.

Preferably, the first partitioning elements also have a plurality of transverse slits extending along a direction transverse to the plurality of vertical slits of the first partitioning elements, and the method further comprises the step of:
e) arranging respective horizontal partitioning elements, preferably made of flexible material, through a pair of horizontal slits of a respective pair of successive first partitioning elements.

Preferably, moreover, step a) of providing the first partitioning elements comprises the sub-step of:
f1) making at least a portion of surface of at least one of the first partitioning elements microporous or microdrilled by means of a micro drilling method, preferably by means of a laser; and/or
wherein step b) of providing the second partitioning elements comprises the sub-step of: f2) making at least a portion of surface of at least one of the second partitioning elements microporous or microdrilled by a micro drilling method, preferably by means of a laser.

In general, within the scope of the present description and the attached claims, a material is defined as "microporous" when it has a plurality of pores or holes having an average diameter between about 50 and about 1000 nanometers. Furthermore, within the scope of the present description and the attached claims, a material is defined as "microdrilled" when it has a plurality of pores or holes having an average diameter between about 1 micrometer and about 500 micrometers. Finally, within the scope of this description and the attached claims, a material is defined as "drilled" when it has a plurality of pores or holes having an average diameter greater than about 500 micrometers.

Preferably, moreover, step a) of providing the first partitioning elements comprises the sub-step of:
g1) manufacturing the first partitioning elements from sheets having a thickness between about 20 and about 300 micrometers by means of a punching or die-cutting method; and/or
wherein step b) of providing the second partitioning elements comprises the sub-step of:
   g2) manufacturing the second partitioning elements from sheets having a thickness between about 20 and about 300 micrometers by means of a punching or die-cutting method.

Advantageously, according to an embodiment of the method for manufacturing the core according to the invention, step c) follows step d).

Finally, preferably, this method further comprises the step of:
h) following step d), strengthening the assembly formed by the first partitioning elements and the second partitioning elements by means of immersion in resin, preferably epoxy or phenolic resin, and successive curing.

Also forming part of the present invention is a method for manufacturing a sound-absorbing panel with a sandwich structure for noise reduction in an aircraft, comprising the steps of:
x1) carrying out a method for manufacturing a core according to the first aspect of the invention;
x2) arranging said core obtained in step x1) on a first skin so that the second edge of each first partitioning element rests on said first skin;
x3) arranging a second skin on the core so that a second edge of each second partitioning element, opposite to said first edge of each second partitioning element, is in contact with the second skin.

Preferably, this method further comprises the steps of:
y1) arranging a layer of structural adhesive between the second edge of each first partitioning element and the first skin; and/or
y2) arranging a layer of structural adhesive between the second edge of each second partitioning element and the second skin.

Preferably, this method further comprises the step of:
z1) making the first partitioning elements integral with the first skin by means of heat welding; and/or
z2) making the second partitioning elements integral with the first partitioning elements by means of heat welding; and/or
z3) making the second skin integral with the second partitioning elements by means of heat welding.

A further part of the invention is a core for a sound-absorbing panel with sandwich structure for noise reduction in an aircraft comprising:
- a plurality of first sheet-shaped partitioning elements, each first partitioning element having a plurality of vertical slits, which extend transversely from a respective first edge of each first partitioning element, the first partitioning elements being arranged spaced from each other so that the distance between two successive first partitioning elements of the plurality of first partitioning elements is not constant; and
- a plurality of second sheet-shaped partitioning elements, each second partitioning element having a plurality of vertical slits, the vertical slits extending transversely from a respective first edge of each second partitioning element; the second partitioning elements being arranged on the first partitioning elements, transversely to the first partitioning elements, so that each vertical slit of the plurality of vertical slits of the second partitioning elements interlocks with a respective vertical slit of the plurality of vertical slits of a respective first partitioning element, so that the first partitioning elements and the second partitioning elements define between them a plurality of cells, each cell being delimited laterally by a pair of opposing first partitioning elements and a pair of opposing second partitioning elements.

Preferably, in the core according to the third aspect of the invention, the first partitioning elements also have a plurality of transverse slits extending along a direction transverse to the plurality of vertical slits of the first partitioning elements, and the core further comprises respective horizontal partitioning elements, preferably made of flexible material, arranged through a pair of horizontal slits of a respective pair of successive first partitioning elements. In such case, preferably, the plurality of transverse slits is distributed according to an asymmetrical pattern on each first partitioning element, and the plurality of transverse slits is distributed according to the same pattern on each first partitioning element.

Preferably, in the core according to the third aspect of the invention, the first partitioning elements further have a plurality of first openings suitable to connect adjacent cells of said plurality of cells, and/or the second partitioning elements further have a plurality of second openings suitable for connecting adjacent cells of said plurality of cells. In said case, preferably, the core further comprises at least one microporous or microdrilled membrane, arranged to at least partially close at least one of said first or second openings.

Preferably, in the core according to the third aspect of the invention, the distance between two successive vertical slits of the plurality of vertical slits of each first partitioning element is not constant.

Finally, according to a fourth aspect of the invention, a sound-absorbing panel with a sandwich structure for noise reduction in an aircraft also forms part of the invention, comprising:
- an at least partially acoustically permeable first skin;
- a core according to the third aspect of the invention, arranged on the first skin so that a second edge of each first partitioning element, opposite to said first edge of each first partitioning element, rests on said first skin; and
- a second skin, arranged on the core in that a second edge of each second partitioning element, opposite to said first edge of each second partitioning element, is in contact with the second skin.

Preferably, in the panel according to the fourth aspect of the invention, the first skin extends over a surface having a single or double curvature.

Further features and advantages of this invention will be clarified by the detailed description that follows, given purely by way of non-limiting example in reference to the appended drawings, wherein:
Fig. 1 is one of a sound-absorbing panel with a sandwich structure, or comprising a core interposed between a first and second skin, according to an embodiment of the invention;
Fig. 2 is a view of the core of the sound-absorbing panel in Fig. 1;
Fig. 3 is a view of a step in the method for manufacturing the core for a sound-absorbing panel according to an embodiment of the invention;
Fig. 4 is a view of a further step of the method in Fig. 3;
Fig. 5 is a view of a further step of the method in Fig. 3;
Fig. 6 is a view of a step in the manufacturing method of the sound-absorbing panel in Fig. 1;
Fig. 7 is a side view of a first partitioning element according to an embodiment of the invention, a side view of a second partitioning element according to an embodiment of the invention, and an axonometric view of a plurality of horizontal partitioning elements according to an embodiment of the invention;
Fig. 8 is a side view of a first partitioning element according to a further embodiment of the invention, a side view of a second partitioning element according to a further embodiment of the invention, and an axonometric view of a plurality of horizontal partitioning elements according to a further embodiment of the invention;
Fig. 9 is a view of a step in the method for manufacturing the core for a sound-absorbing panel according to a further embodiment of the invention;
Fig. 10 is a view of a further step of the method in Fig. 9;
Fig. 11 is a view of a step in the manufacturing method of a sound-absorbing panel comprising a core obtained from the method shown in Fig. 9 and 10.

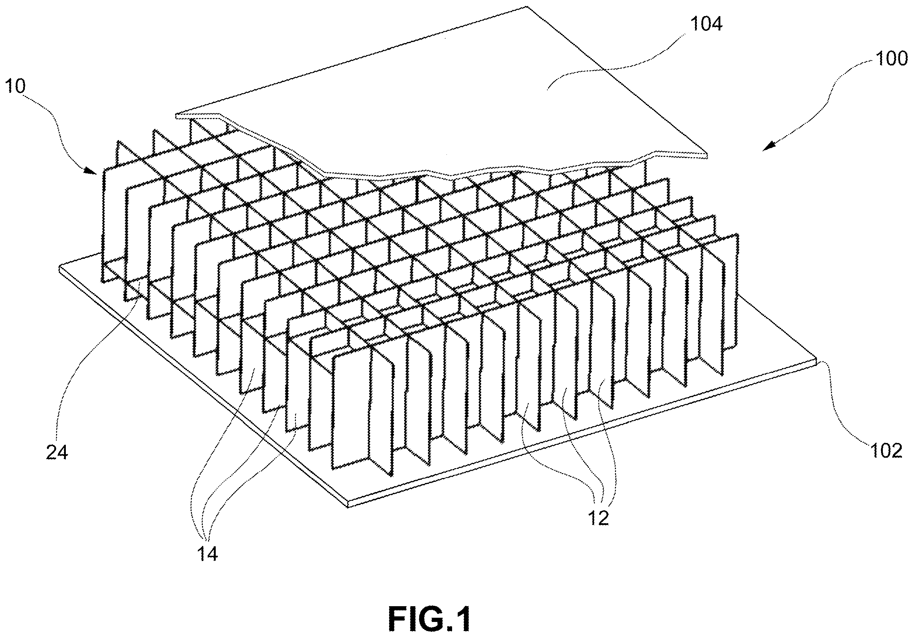

As may be seen in Fig. 1, a sound-absorbing panel with sandwich structure for noise reduction in an aircraft is generally denoted by the reference number 100. The panel 100 essentially comprises a first skin 102, a second skin 104, and a core 10 arranged between the first skin 102 and the second skin 104.

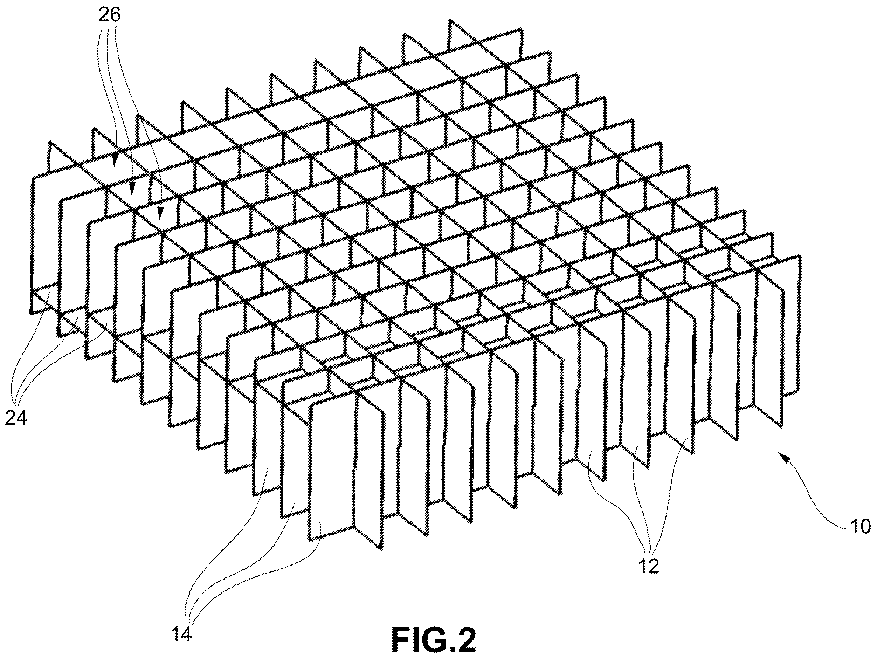

As shown in Fig. 2, the core 10 essentially comprises a plurality of first partitioning elements 12 and a plurality of second partitioning elements 14.

The first partitioning elements 12 are sheet-shaped elements, or they have a plate or sheet structure, or they are thin, two-dimensional elements, or they have a general shape such that the thickness is negligible with respect to the other two dimensions. Preferably, the thickness of the first partitioning elements is between about 20 micrometers and about 300 micrometers.

The first partitioning elements 12 may be provided in a variety of materials, for example and without limitation, meta-aramid-based materials such as NOMEX^{®}, or aluminum, thermoplastic materials, such as PEEK (polyether-ether-ketone), PEI (polyether-imide), PEKK (polyether-ketone-ketone), PAEK (polyaryletherketone) or PPS (polyphenylene sulfide), or epoxy resin, or composite materials comprising a matrix phase made of thermoplastic materials, such as PEEK (polyether-ether-ketone), PEI (polyether-imide), PEKK (polyether-ketone-ketone), PAEK (polyaryletherketone) or PPS (polyphenylene sulfide), and a fiber reinforcement phase, such as glass fibers or carbon fibers.

In an embodiment, at least a portion of surface of at least one of said first partitioning elements 12 is provided with micropores or microdrillings.

The first partitioning elements 12 are arranged spaced from each other. In a preferred embodiment, the first partitioning elements 12 are arranged parallel and spaced. Even though in the figures, purely for ease of representation, and without this limiting the scope of the invention, it has been preferred to represent the distance between the first partitioning elements 12 as constant, according to the invention, the distance between two successive first partitioning elements 12 of the plurality of first partitioning elements 12 is not constant, or essentially, at least one of the first partitioning elements 12 is arranged, with respect to one or both of the first partitioning elements 12 nearest thereto, at a different distance from that at which the other first partitioning elements 12 are arranged with respect to each other. Preferably, all the first partitioning elements 12 are arranged at different distances from each other with respect to the first partitioning elements 12 closest thereto. By way of example, a first partitioning element 12 is arranged at a distance d with respect to the successive first partitioning element 12, which in turn is arranged at a distance 1.5d with respect to the successive first partitioning element 12, which in turn is arranged at a distance 1.2d from the successive first partitioning element 12, which in turn is arranged at a distance 0.8d with respect to the successive first partitioning element 12, and so on.

Each first partitioning element 12 has a first edge 12a, and a second edge 12b, arranged opposite to said first edge 12a.

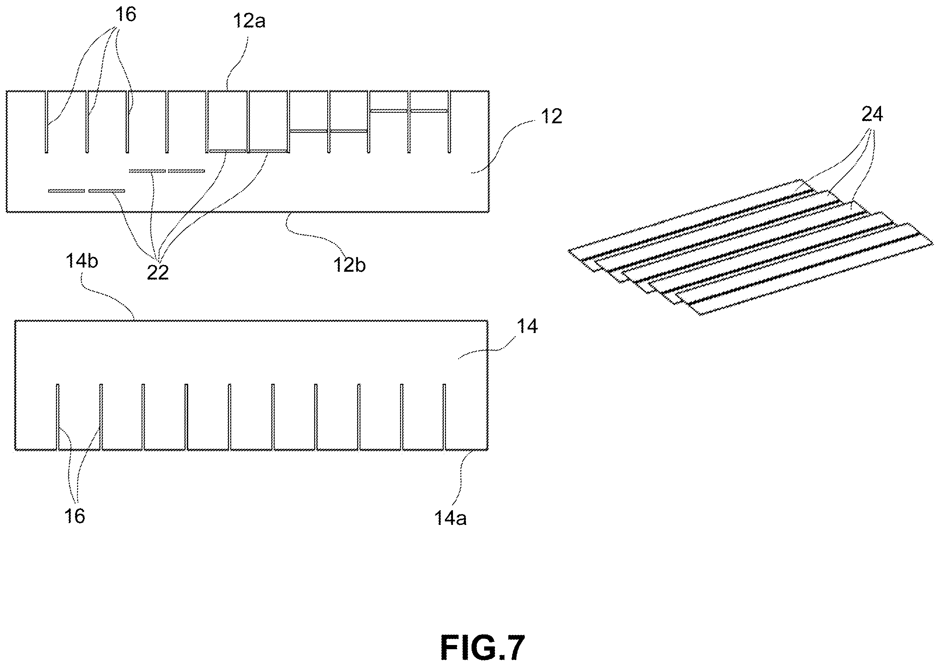

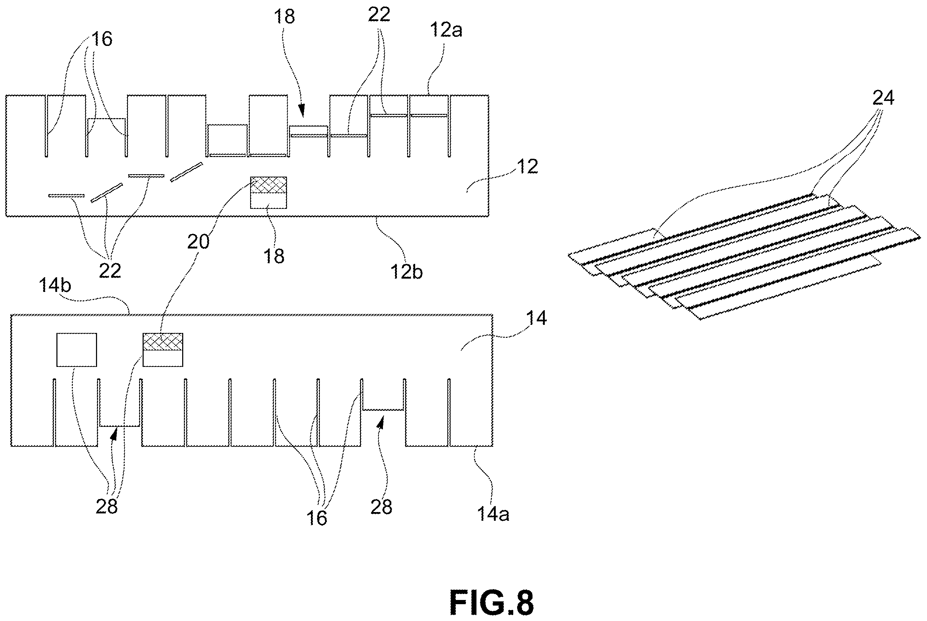

Each first partitioning element 12 further has a plurality of vertical slits 16, which are arranged, and extend, transversely from the first edge 12a of the respective first partitioning element 12. In an embodiment, the vertical slits 16 of the first partitioning elements 12 are distributed in an asymmetrical pattern on each first partitioning element 12, and this pattern is repeated equally on each first partitioning element 12. In an embodiment, the distance between two successive vertical slits 16 of the plurality of vertical slits 16 of each first partitioning element 12 is not constant. Alternatively, such as in the embodiments shown in Fig. 7 and 8, this distance is essentially constant. The vertical slits 16 of the first partitioning elements 12 may also have different lengths from each other. The vertical slits 16 are preferably, but not necessarily, arranged orthogonally with respect to the first edge 12a of the respective first partitioning element 12. Alternatively, the vertical slits 16 may be arranged transversely, inclined non-orthogonally with respect to said first edge 12a.

In an embodiment, at least one first partitioning element 12 has a first opening 18, in the form of a through-hole, for example, with a quadrangular cross section, as shown in Fig. 8, or circular cross section, or again in the form of a gap from the first edge 12a or the second edge 12b or of a notch, as shown in the same figure. In said case, it is also possible that the core 10 comprises a microporous or microdrilled membrane 20 (or a plurality of membranes 20) arranged so as to at least partially close at least one of said first openings 18. Said membrane 20 preferably has an acoustic resistance feature designed specifically to maximize sound absorption. The same membrane 20 may be assembled on the first partitioning element 12, for example, by a bonding, welding, or heat-welding method.

Preferably, at least some of the first partitioning elements 12 have respective transverse slits 22. The transverse slits extend along a direction transverse to the direction of extension of the vertical slits 16 of the respective first partitioning elements 12, e.g., inclined by 45°, 60° or 90° thereto. The transverse slits 22 of the first partitioning elements 12 are not necessarily all equal to each other, either with respect to their length or with respect to their slope or orientation. In said embodiment, even more preferably, the core 10 further comprises horizontal partitioning elements 24 that are preferably made of flexible material, and which are arranged in such a way as to pass through a pair of transverse slits 22 of a respective pair of first successive partitioning elements 12. Preferably, said horizontal partitioning elements 24 are likewise arranged in such a manner so as to pass through a plurality of transverse slits 22 of a respective plurality of successive first partitioning elements 12, for example, in such a manner so as to pass through all first partitioning elements 12 by interlocking in a respective transverse slit 22 of each.

As is clear, the horizontal partitioning elements 24 must have a shape suitable to be threaded inside said transverse slits 22; preferably, the horizontal partitioning elements 24 are also, like the first partitioning elements 12, sheet-shaped elements, or they have a plate or sheet structure, or they are thin, two-dimensional elements, that is, they have a general shape such that the thickness is negligible with respect to the other two dimensions, and even more preferably they have a plank or bar shape. Preferably, the thickness of the first partitioning elements is between about 20 micrometers and about 300 micrometers.

The horizontal partitioning elements 24 may be provided in a variety of materials, for example and without limitation, meta-aramid-based materials such as NOMEX^{®}, or aluminum, thermoplastic materials, such as PEEK (polyether-ether-ketone), PEI (polyether-imide), PEKK (polyether-ketone-ketone), PAEK (polyaryletherketone) or PPS (polyphenylene sulfide), or epoxy resin, or composite materials comprising a matrix phase made of thermoplastic materials, such as PEEK (polyether-ether-ketone), PEI (polyether-imide), PEKK (polyether-ketone-ketone), PAEK (polyaryletherketone) or PPS (polyphenylene sulfide), and a fiber reinforcement phase, such as glass fibers or carbon fibers.

In an embodiment, the horizontal partitioning elements 24 may also have one or more openings of the same type as those previously described relative to the first partitioning elements 12, and made and shaped in a similar manner thereto.

In an embodiment, the horizontal partitioning elements 24 may also have at least one portion with a microporous or microdrilled surface.

In an embodiment, as shown in Fig. 8, the horizontal partitioning elements 24 are not all equal to each other, but rather have different lengths. In this way, it is possible to make core 10 configurations in which some horizontal partitioning elements 24 are arranged through respective transverse slits 22 of two successive first partitioning elements 12, some other horizontal partitioning elements 24 are arranged through respective transverse slits 22 of three successive first partitioning elements 12, some other horizontal partitioning elements 24 are arranged through respective transverse slits 22 of four successive first partitioning elements 12, and so on, so as to make cells 26 of different shapes.

The second partitioning elements 14 are sheet-shaped elements, or they have a plate or sheet structure, or they are thin, two-dimensional elements, or they have a general shape such that the thickness is negligible with respect to the other two dimensions. Preferably, the thickness of the second partitioning elements 14 is between about 20 micrometers and about 300 micrometers.

The second partitioning elements 14 may be provided in a variety of materials, for example and without limitation, meta-aramid-based materials such as NOMEX^{®}, or aluminum, thermoplastic materials, such as PEEK (polyether-ether-ketone), PEI (polyether-imide), PEKK (polyether-ketone-ketone), PAEK (polyaryletherketone) or PPS (polyphenylene sulfide), or epoxy resin, or composite materials comprising a matrix phase in thermoplastic materials, such as PEEK (polyether-ether-ketone), PEI (polyether-imide), PEKK (polyether-ketone-ketone), PAEK (polyaryletherketone) or PPS (polyphenylene sulfide), and a fiber reinforcement phase, such as glass fibers or carbon fibers.

In an embodiment, at least a portion of the surface of at least one of said second partitioning elements 14 is provided with micropores or microdrillings.

Each second partitioning element 14 has a first edge 14a, and a second edge 14b, arranged opposite to said first edge 14a.

Each second partitioning element 14 further has, similarly to the first partitioning elements 12, a plurality of vertical slits 16, which are arranged and extend transversely from the first edge 14a of the respective second partitioning element 14. In an embodiment, the vertical slits 16 of the second partitioning elements 14 are distributed in an asymmetrical pattern on each second partitioning element 14, and this pattern is repeated equally on each second partitioning element 14. Since, as explained in more detail below, each vertical slit 16 of the plurality of vertical slits 16 of the second partitioning elements 14 interlocks with a respective vertical slit 16 of the plurality of vertical slits 16 of a respective first partitioning element 12, so that the first partitioning elements 12 and the second partitioning elements 14 define a plurality of cells 26 between them, and since the distance between two successive first partitioning elements 12 of the plurality of first partitioning elements 12 is not constant, or essentially, at least one of the first partitioning elements 12 is arranged, with respect to one or both of the first partitioning elements 12 nearest thereto, at a different distance with respect to that at which the other, or two other, first partitioning elements 12 are arranged between them, also the distance between two successive vertical slits 16 of the plurality of vertical slits 16 of each second partitioning element 14 is not constant. The vertical slits 16 of the second partitioning elements 14 may also have different lengths from each other. The vertical slits 16 are preferably, but not necessarily, arranged orthogonally to the first edge 14a of the respective second partitioning element 14. Alternatively, the vertical slits 16 may be arranged transversely, inclined non-orthogonally with respect to said first edge 14a.

The second partitioning elements 14 are arranged on the first partitioning elements 12, transversely thereto, for example crossing at about 90° or at different angles, such as at about 80° or about 60°. Preferably, the second partitioning elements 14 are all arranged parallel to each other, but in an alternative embodiment the mutual inclination between the first partitioning elements 12 and the second partitioning elements 14 is not necessarily the same for all the first partitioning elements 12 and all the second partitioning elements 14. In a preferred embodiment, the distance between two successive second partitioning elements 14 of the plurality of second partitioning elements 14 is not constant. Alternatively, the second partitioning elements 14 are arranged parallel and spaced at a constant distance.

In each case, the second partitioning elements 14 are arranged on the first partitioning elements 12 so that each vertical slit 16 of the plurality of vertical slits 16 of the second partitioning elements 14 interlocks, that is, engages, or connects or couples by shape coupling, with a respective vertical slit 16 of a respective first partitioning element 14. To facilitate such interlocking or shape coupling, clearly the thickness of the second partitioning elements 14 may be approximately equal to, or slightly greater than, that of the vertical slits 16 of the first partitioning elements 12, and, similarly, the thickness of the first partitioning elements 12 may be approximately equal to, or slightly greater than, that of the vertical slits 16 of the second partitioning elements 14. In this way, first partitioning elements 12 and second partitioning elements 14 fit together and define between them a plurality of cells 26, each of said cells 26 being delimited laterally by a pair of opposing first partitioning elements 12 and a pair of opposing second partitioning elements 14. The cells 26, therefore, may have basically a prism shape with a quadrangular base, or a shape composed of the sum of prisms with a quadrangular base. Clearly, therefore, the arrangement of the second partitioning elements 14 depends on the arrangement of the vertical slits 16 on the first partitioning elements 12. The cells 26 may, therefore, have different shapes and sizes depending on the relative distance between the pairs of opposing first partitioning elements 12 and opposing second partitioning elements 14 that delimit them laterally, as well as on the additional optional features that determine their shape.

In an embodiment, at least one second partitioning element 14 has a second opening 28 in the form of a through hole, for example, with a quadrangular cross section, as shown in Fig. 8, or circular cross section, or again in the form of a gap from the first edge 14a or the second edge 14b or of a notch, as shown in the same figure. In such a case, it is also possible for the core 10 to comprise a microporous or microdrilled membrane 20 (or a plurality of membranes 20) arranged to at least partially close at least one of said second openings 28. Said membrane 20 preferably has an acoustic resistance feature designed specifically to maximize sound absorption. Said membrane 20 may be assembled on the second partitioning element 14, for example, by a bonding, welding, or heat-welding method. Of course, since the relative arrangement between the first partitioning elements 12 and the second partitioning elements 14 forms a plurality of cells 26, the first openings 18 and/or the second openings 28, when present, connect adjacent cells 26 of said plurality of cells 26. The first openings 18 and/or the second openings 28, when present, may also serve the function of a drainage hole for any liquids accumulated within the core 10.

Preferably, at least some of the second partitioning elements 14 have respective transverse slits 22. The transverse slits extend along a direction transverse to the direction of extension of the vertical slits 16 of the respective second partitioning elements 14, e.g. inclined by 45°, 60° or 90° thereto. The transverse slits 22 of the second partitioning elements 14 are not necessarily all equal to each other, either with respect to their length or with respect to their inclination or orientation. In said embodiment, even more preferably, the core 10 further comprises, as mentioned, horizontal partitioning elements 24, preferably made of flexible material, and which may also be arranged in such a way as to pass through a pair of transverse slits 22 of a respective pair of second successive partitioning elements 14, in addition to, or as an alternative to, the horizontal partitioning elements 24 arranged in such a way as to pass through a pair of transverse slits 22 of a respective pair of first successive partitioning elements 12 already described above. Preferably, said horizontal partitioning elements 24 are likewise arranged in such a manner as to pass through a plurality of transverse slits 22 of a respective plurality of second successive partitioning elements 14, for example in such a way as to pass through all of the second partitioning elements 14 by interlocking in a respective transverse slit 22 of each of these, in addition to, or as an alternative to, horizontal partitioning elements 24 arranged in such a way as to pass through a plurality of transverse slits 22 of a respective plurality of first successive partitioning elements 12, for example, in such a manner as to pass through all first partitioning elements 12, interlocking in a respective transverse slit 22 of each of these, as previously described.

Preferably, the first partitioning elements 12 are all equal to each other, but it is also possible that some first partitioning elements 12 of the plurality of first partitioning elements 12 are different from the others, in terms of thickness, size, or otherwise, with regard to the pattern of arrangement of the vertical slits 16, and in particular with regard to the presence of the optional features just described (presence of first openings 18, presence of membranes 20, and so on).

Similarly, preferably, the second partitioning elements 14 are all the same as each other, but it is also possible that some of the second partitioning elements 14 are different from the others, in terms of thickness, size, or otherwise, with regard to the pattern of arrangement of the vertical slits 16, and in particular with regard to the presence of the optional features just described (presence of second openings 28, presence of membranes 20, and so on).

As mentioned previously, the core 10 according to the invention may be used as the central layer of the sound-absorbing panel 100, which also comprises the first skin 102 and the second skin 104. In said case, the core 10 is arranged between the first skin 102 and the second skin 104, so that the second edge 12b of each partitioning element 12 is resting on, or in contact with, the first skin 102, and so that the second edge 14b of each second partitioning element 14 is in contact with the second skin 104.

The first skin 104 has a generally thin, or pellicular, structure, or it has a much smaller thickness than the other two dimensions, and, when the panel 100 is mounted in use, it is arranged facing the sound source; in particular, the first skin 102 may be facing the engine, in a radially inward direction of the nacelle.

The first skin 102 may be made of different materials, such as aluminum or polymeric materials. In an embodiment, the first skin 102 is made of epoxy resin. In other purely illustrative and non-limiting embodiments, the first skin 102 may be made, for example, of a thermoplastic polymeric material from the list comprising: PEEK (polyether-ether-ketone), PEK (polyether-ketone), PEI (polyether-imide), nylon, PET (polyethylene terephthalate), PAEK (polyaryletherketone), PPS (polyphenylene sulfide), PA (polyamides), PPSU (polyphenylsulfone), PC (polycarbonate) and PP (polypropylene). Alternatively, the first skin 102 may be made, for example, of a thermosetting polymeric material from the non-exhaustive list comprising: epoxy resin, bismaleimide resin, cyanate esters and polyimide. In an embodiment, the first skin 102 may be made of composite material, such as, for example, a composite material having an epoxy or bismaleimide resin matrix and a carbon fiber reinforcement phase.

The first skin 102 may preferably be between about 300 and about 1500 micrometers thick. Even more preferably, the first skin 102 is between about 500 and about 1200 micrometers thick.

The first skin 102 is made as an acoustically permeable component, for example it is drilled or microdrilled or microporous, while the second skin 104 is made as an acoustically impermeable body. For this purpose, preferably, the first skin 102 is provided with a plurality of through holes, micropores, or microholes, which may be made, for example, by a conventional mechanical punching method or by a mechanical drilling or boring method, and distributed, preferably homogeneously, over its entire area. The microholes are adapted to allow sound waves to pass from the outside of the panel 100 to its central layer, or to the inner volumes of the cells 26 of the core 10.

Preferably, the microholes cover a percentage of the area of the first skin 102 between about 3% and about 50%, and more preferably between about 3% and about 15%. In a preferred embodiment, the diameter of the microholes or micropores or holes is between about 100 micrometers and about 3000 micrometers. Even more preferably, the holes are about 1000 to about 1500 micrometers in diameter. Nevertheless, both the percentage of area covered by the microholes 18 and their diameter may also be smaller or larger than described here purely by way of non-limiting example.

In each case, the first skin 102 of the panel 100 allows a sound wave to pass through the first skin 102 and up to the inner volume of the plurality of cells 26 of the core 10, but the second skin 104 does not allow said sound wave to escape from the second skin 104.

The second skin 104 has a generally thin, or pellicular, structure, or it has a much smaller thickness than the other two dimensions, and, when the panel 100 is mounted in use, it faces the side opposite the sound source; in particular, the second skin 104 may face the side opposite the motor, or in a direction radially outward from the nacelle. The second skin 104 may be equal or equivalent to the first skin 102 in terms of thickness, area, and shape, but has no microholes.

The second skin 104 may be made of different materials, such as aluminum or polymeric materials. In an embodiment, the second skin 104 is made of epoxy resin. In other purely illustrative and non-limiting embodiments, the second skin 104 may be made, for example, of a thermoplastic polymeric material from the list comprising: PEEK (polyether-ether-ketone), PEK (polyether-ketone), PEI (polyether-imide), nylon, PET (polyethylene terephthalate), PAEK (polyaryletherketone), PPS (polyphenylene sulfide), PA (polyamides), PPSU (polyphenylsulfone), PC (polycarbonate) and PP (polypropylene). Alternatively, the second skin 104 may be made, for example, of a thermosetting polymeric material from the non-exhaustive list including: epoxy resin, bismaleimide resin, cyanate esters, and polyimide. In an embodiment, the second skin 104 may be made of a composite material, such as, for example, a composite material having an epoxy or bismaleimide resin matrix and a carbon fiber reinforcement phase.

The second skin 104 may preferably be between about 300 and about 1500 micrometers thick. Even more preferably, the second skin 104 is between about 500 and about 1200 micrometers thick.

Advantageously, the second skin 104, the core 10 and the first skin 102 may be made from the same material.

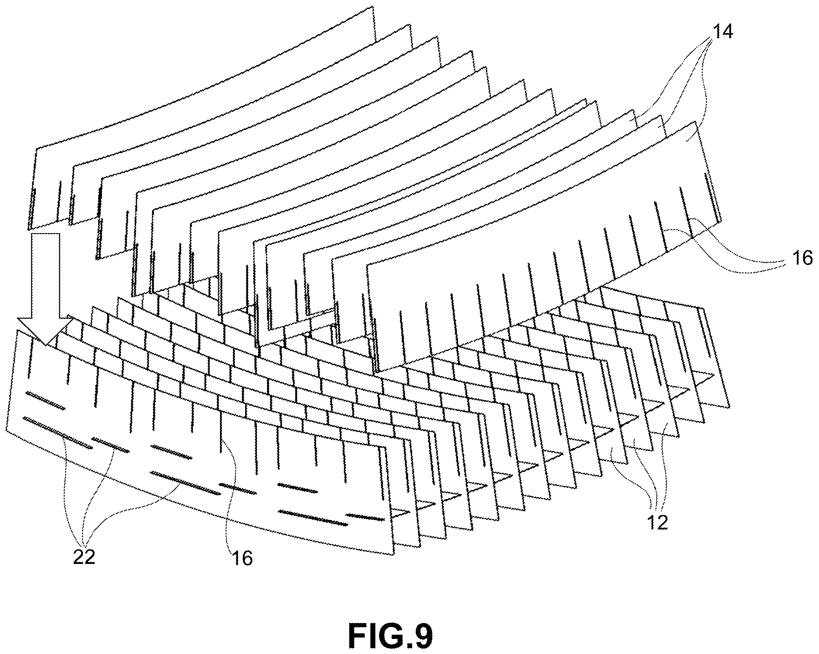

As is visible in Fig. 9 through 11, the panel 100 may also be formed with a single curvature, or in the shape of the side surface portion of a cylinder with a circular or ellipsoidal base, or with a double curvature, or in the shape of the surface portion of a sphere or ellipsoid. In said case, at least the first skin 102 extends over a surface having single or double curvature. Preferably, the first edge 12a of the first partitioning elements 12 also follows said curvature. Even more preferably, the panel 100 is adapted to be used to make up an insulating skin having as a whole a substantially cylindrical shape, or a shape suitable to at least partially surround an aircraft engine nacelle. For example, in an embodiment, the aircraft engine sound insulation is achieved by joining a plurality of sound-absorbing panels 100 having the shape of portions of cylindrical surfaces. In further embodiments, the panel 100 may have a substantially flat shape, or one with limited curvature, as for example shown in Fig. 1.

As mentioned previously, the above-described core 10 may be obtained by the method for manufacturing the core 10 for a sound-absorbing panel 100 with sandwich structure for noise reduction in an aircraft according to an aspect of the invention.

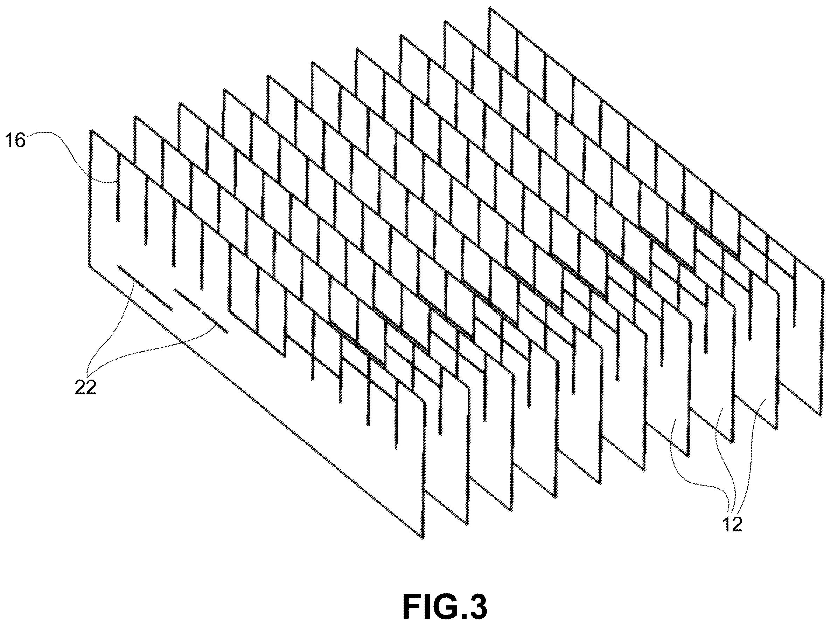

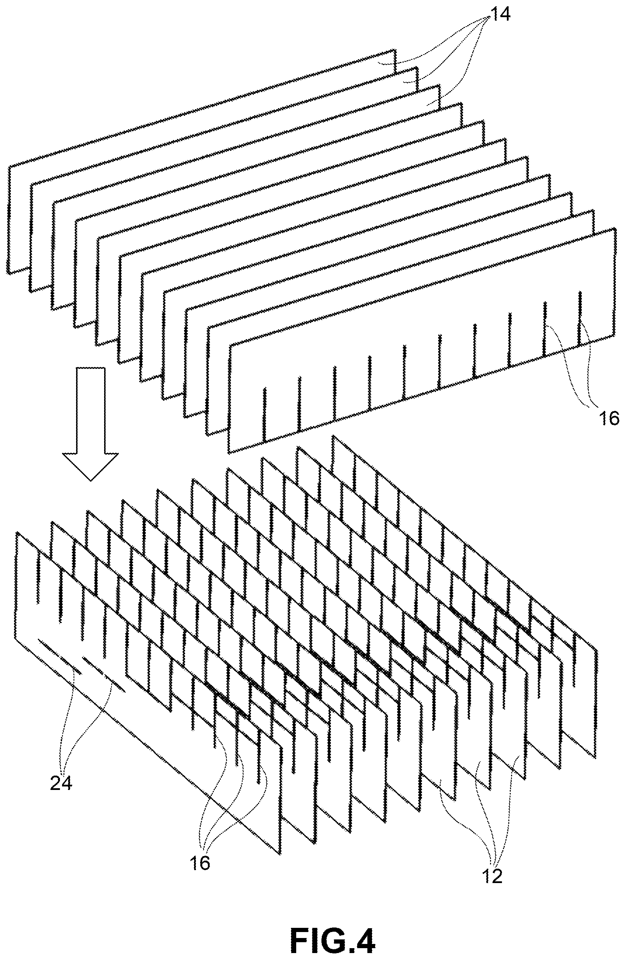

The method for manufacturing the core 10 essentially comprises the steps of:
a) providing a plurality of first partitioning elements 12 as described above according to one aspect of the invention, as shown in Fig. 3;
b) providing a plurality of second partitioning elements 14 as described above;
c) arranging the first partitioning elements 12 on a work surface, spaced from each other so that the distance between two successive first partitioning elements of the plurality of first partitioning elements is not constant, and so that the second edge 12b of each first partitioning element 12 rests on said work surface. At this stage it is possible to make use of support tools (not shown, known per se) to hold the first partitioning elements 12 in place; and
d) arranging the second partitioning elements 14 on the first partitioning elements 12, transversely thereto, so that each vertical slit 16 of the plurality of vertical slits 16 of the second partitioning elements 14 interlocks with a respective vertical slit 16 of the plurality of vertical slits 16 of a respective first partitioning element 12, so that the first partitioning elements 12 and the second partitioning elements 14 define between them the plurality of cells 26 delimited laterally by a pair of opposing first partitioning elements 12 and a pair of opposing second partitioning elements 14, and thus obtain the core 10, as shown in Fig. 4, with respect to an embodiment, and in Fig. 9, with respect to a second embodiment.

Once the second partitioning elements 14 have been arranged on the first partitioning elements 12, the connection between them may be strengthened through a dedicated method that may also be selected by taking into consideration the material of which the first partitioning elements 12 and the second partitioning elements 14, and therefore the core 10, are made. For example, for this purpose, the method may additionally comprise the step of: h) in the following step d), strengthening the assembly formed by the first partitioning elements 12 and the second partitioning elements 14, or the core 10, by resin immersion and subsequent curing.

Preferably, in said case, the resin used is an epoxy resin or a phenolic resin.

Alternatively, the assembly formed by the first partitioning elements 12 and the second partitioning elements 14, or the core 10, may be strengthened by bonding, such as by glue spraying.

Alternatively, the assembly formed by the first partitioning elements 12 and the second partitioning elements 14, or the core 10, may be strengthened by welding/soldering, or by heat welding.

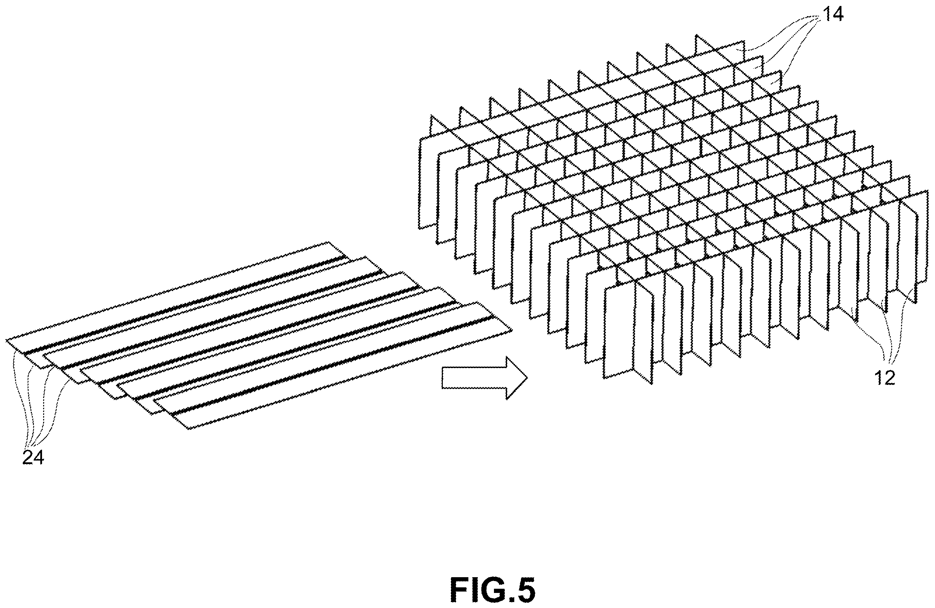

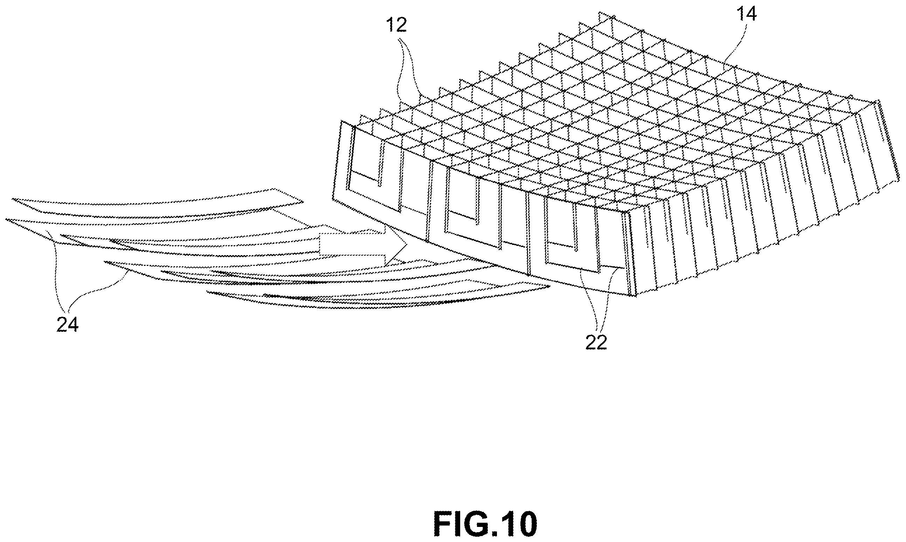

When the first partitioning elements 12 are provided in an embodiment having a plurality of transverse slits 22, as mentioned above in relation to the first aspect of the invention, the method may preferably comprise the step of:
e) arranging respective horizontal partitioning elements 24 through a pair of transverse slits 22 of a respective pair of successive first partitioning elements 12 as shown in Fig. 5, with respect to an embodiment, and in Fig. 10, with respect to another embodiment.

As mentioned previously, preferably, step e) is carried out in such a way as to arrange respective horizontal partitioning elements 24 through a plurality of transverse slits 22 of a respective plurality of successive first partitioning elements 12, even more preferably in such a way as to arrange respective horizontal partitioning elements 24 through a plurality of transverse slits 22 of all the successive first partitioning elements 12.

Moreover, when the second partitioning elements 14 are provided in an embodiment having a plurality of transverse slits 22, as mentioned above in relation to the first aspect of the invention, the method may preferably comprise the step of:
e2) arranging respective horizontal partitioning elements 24 through a pair of transverse slits 22 of a respective pair of second successive partitioning elements 14.

As mentioned previously, preferably, step e2) is carried out in such a way as to arrange respective horizontal partitioning elements 24 through a plurality of transverse slits 22 of a respective plurality of second successive partitioning elements 14, even more preferably in such a way as to arrange respective horizontal partitioning elements 24 through a plurality of transverse slits 22 of all the second successive partitioning elements 14.

Of course, the method according to the invention may comprise only step e), only step e2), or even both step e) and step e2) in a manner known per se to the person skilled in the art.

Preferably, in the method according to the invention, step a) of providing the first partitioning elements 12 comprises the sub-step of:
f1) carrying out a micro drilling method on at least a portion of surface of at least one of the first partitioning elements 12 so as to make said at least one portion of the surface microporous.

Preferably, in the method according to the invention, step b) of providing the second partitioning elements 14 comprises the sub-step of:
f2) carrying out a micro drilling method on at least a portion of surface of at least one of the second partitioning elements 14 so as to make said at least one portion of the surface microporous.

In both step f1) and in step f2), the micro drilling method may preferably be carried out by means of a laser, but it may also be carried out by other known drilling methods, depending on the material in which the first partitioning elements 12 and the second partitioning elements 14 are provided, respectively.

Of course, the method according to the invention may comprise only step f1), only step f2), or even both step f1) and step f2) in a manner known per se to the person skilled in the art.

Preferably, in the method according to the invention, step a) of providing the first partitioning elements 12 may additionally comprise the sub-step of:
g1) manufacturing the first partitioning elements 12 from sheets having a thickness between about 20 and about 300 micrometers by means of a punching or die-cutting method.

Through the punching or die-cutting method of the sub-step g1), the first edge 12a and the second edge 12b, and also the vertical slits 16, and/or the transverse slits 22 (when present), and/or the first openings 18 (when present) may be obtained.

Preferably, in the method according to the invention, step b) of providing the second partitioning elements 14 may additionally comprise the sub-step of:
g2) manufacturing the second partitioning elements 14 from sheets having a thickness between about 20 and about 300 micrometers by means of a punching or die-cutting method.

Through the punching or die-cutting method of sub-step g2) the first edge 14a and the second edge 14b, and also the vertical slits 16, and/or the transverse slits 22 (when present), and/or the first openings 18 (when present) may be obtained.

Alternatively, in sub-steps g1) and/or g2), instead of the punching or die-cutting method, a conventional cutting method may be carried out on the aforesaid sheets, preferably a laser cutting method.

The sheets used in sub-step g1) and/or in sub-step g2) may be provided made of different materials, for example and without limitation, meta-aramid-based materials such as NOMEX^{®}, or aluminum, thermoplastic materials, such as PEEK (polyether-ether-ketone), PEI (polyether-imide), PEKK (polyether-ketone-ketone), PAEK (polyaryletherketone) or PPS (polyphenylene sulfide), or epoxy resin, or in composite materials comprising a matrix phase in thermoplastic materials, such as PEEK (polyether-ether-ketone), PEI (polyether imide), PEKK (polyether-ketone-ketone), PAEK (polyaryletherketone) or PPS (polyphenylene sulfide), and a fiber reinforcement phase, such as glass fibers or carbon fibers.

Of course, the method according to the invention may comprise only the sub-step g1), only the sub-step g2), or even both the sub-step g1) and the sub-step g2) in a manner known per se to the person skilled in the art.

Alternatively, at least some of the first partitioning elements 12, and/or the second partitioning elements 14, and/or the horizontal partitioning elements 24, are manufactured using an additive manufacturing method from a filament using an FFF (i.e., Fused Filament Fabrication) technique or from powders using a laser sintering technique.

As mentioned previously, the core 10 may be mounted between the first skin 102 and the second skin 104 to form the sound-absorbing panel 100.

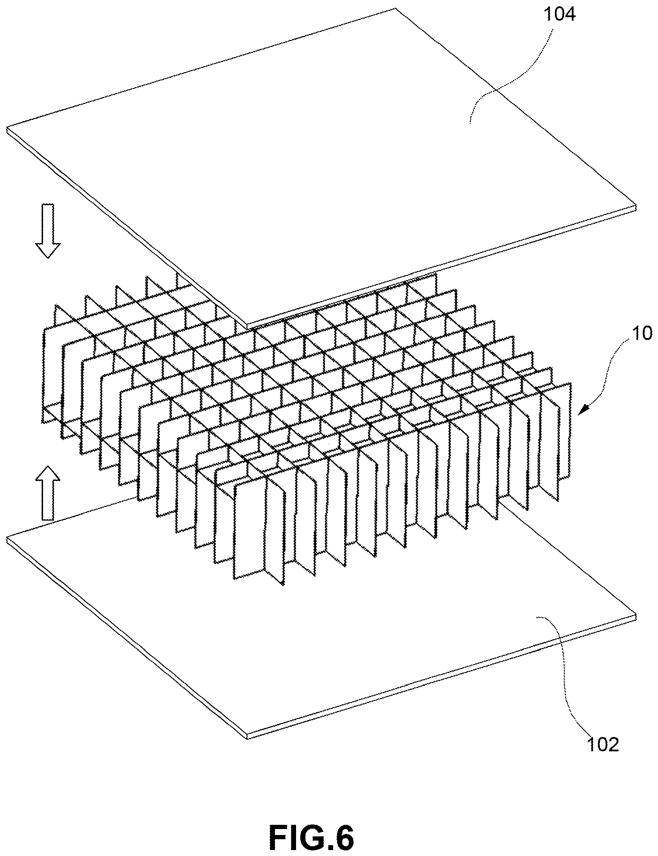

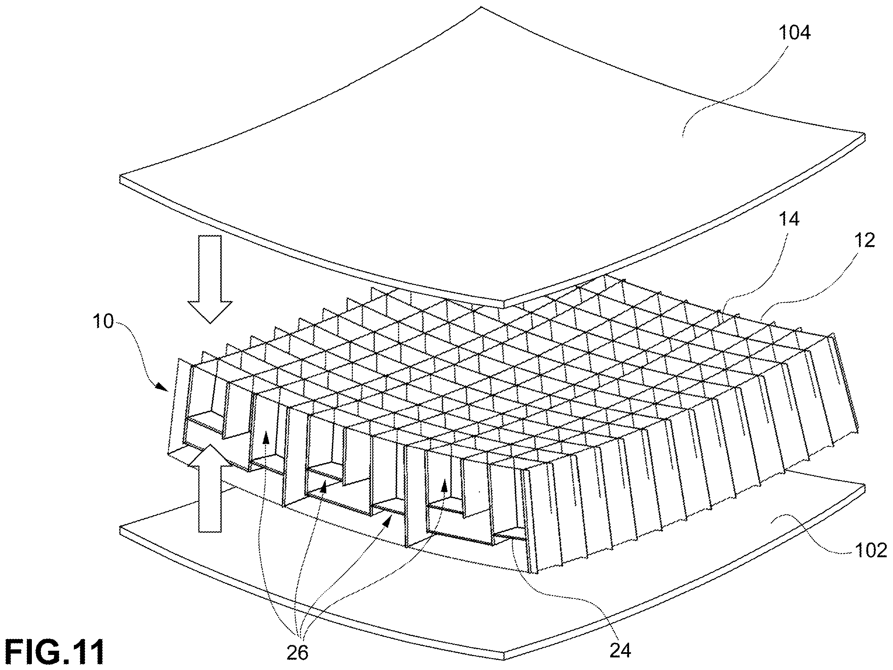

The method for manufacturing the panel 100 essentially comprises the steps of:
w1) providing the core 10, the first skin 102, and the second skin 104; and
w2) joining the core 10 and the first skin 102 on one side and the core 10 and the second skin 104 on the other side, as shown in Fig. 6, with respect to an embodiment, and in Fig. 11, with respect to another embodiment.

Specifically, the manufacturing method may comprise the steps of:
x1) carrying out the method for manufacturing the core 10 according to the aspect of the invention described above;
x2) arranging the core 10 obtained in step x1) on the first skin 102; and
x3) arranging the second skin 104 on the core 10.

Step x2) is carried out so that the second edge 12b of each first partitioning element 12 is placed on the first skin 102 and remains in contact therewith. Similarly, step x3) is carried out so that the second edge 14b of each second partitioning element 14 comes in contact with the second skin 104.

The first skin 102 may be provided for use in step x2) already at least partially acoustically permeable, e.g., already equipped with a plurality of through micropores or microholes, or it may be provided initially acoustically impermeable, and then made acoustically permeable following step x2) or following step x3). In fact, it is possible to make the micropores or microholes through the first skin 102 also following steps x2) and x3), when the first skin 102 is already joined to the core 10, for example, by a conventional mechanical punching method.

Of course, the order of execution of step x3) and step x2) may also be reversed with respect to that which has just been described by carrying out the method in an equivalent manner.

Preferably, the manufacturing method of the panel 100 also comprises the step of:
y1) arranging a layer of structural adhesive between the second edge 12b of each first partitioning element 12 and the first skin 102, so as to strengthen the connection between the core 10 and the first skin 102, and ultimately to strengthen the panel 100.

Preferably, the manufacturing method of the panel 100 also comprises the step of:
y2) arranging a layer of structural adhesive between the second edge 14b of each second partitioning element 14 and the second skin 104, so as to strengthen the connection between the core 10 and the second skin 104, and ultimately to strengthen the panel 100.

Of course, the method for manufacturing the panel 100 according to the invention may comprise only step y1), only step y2), or even both step y1) and step y2) in a manner known per se which is evident to the person skilled in the art.

When present, the connection of horizontal partitioning elements 24 to the first partitioning elements 12 and/or the second partitioning elements 14 may also be strengthened through the use of respective layers of structural adhesive.

In addition to, or as an alternative to, using a structural adhesive to strengthen the connection between the first skin 102 and the core and/or between the second skin 104 and the core, the method for manufacturing the panel 100 according to the invention may additionally include a heat welding step. Specifically, the method may comprise at least one of the following steps:
z1) making the first partitioning elements 12 integral with the first skin 102 by heat welding; and/or
z2) making the second partitioning elements 14 integral with the first partitioning elements 12 by heat welding; and/or
z3) making the second skin 104 integral with the second partitioning elements 14 by heat welding.

When present, the connection of the horizontal partitioning elements 24 to the first partitioning elements 12 and/or to the second partitioning elements 14 may also be strengthened by using a heat welding method.

As is evident from the description provided above, due to the method for manufacturing the core, it is possible to obtain a core having a plurality of cells of different shapes and/or sizes for a sound-absorbing panel in a manner that is much quicker and cheaper with respect to the prior art.

Moreover, it is possible to obtain a sound-absorbing panel core that has cells, i.e., resonance chambers, of varying shapes and sizes. This is made possible by the relative arrangement of the first partitioning elements and the second partitioning elements, and by the not necessarily constant distance between two successive first partitioning elements, as well as by the combination of several optional parameters, such as: the not necessarily constant distance between two successive vertical slits of the first partitioning elements and thus between two second partitioning elements interlocked in said two successive vertical slits; the presence of first and/or second openings, i.e., notches or gaps, in the, respectively, first and/or second partitioning elements, and/or any membranes covering at least partially at least one of said first and/or second openings; the presence, if any, of transverse slits and the presence, if any, of horizontal partitioning elements threaded into said transverse slits; the fact that not all horizontal partitioning elements are necessarily of the same length; the fact that transverse slits may be made at different inclinations to each other and with respect to the vertical slits; and so on.

In this way, the core obtained forms a plurality of cells of different shapes and sizes, and variously connected or separated, so as to make the core according to the invention capable of absorbing noise on many different frequencies, even over a very wide frequency spectrum.

Of course, without prejudice to the principle of the invention, the embodiments and the details of construction may vary widely with respect to that which has been described and illustrated purely by way of non-limiting example, without thereby departing from the scope of the invention defined in the appended claims.

## Claims

1. A manufacturing method for manufacturing a core (10) for a sound-absorbing panel (100) with sandwich structure for noise reduction in an aircraft, the method comprising the steps of:
a) providing a plurality of first sheet-shaped partitioning elements (12), each first partitioning element (12) having a plurality of vertical slits (16), which extend transversely from a respective first edge (12a) of each first partitioning element (12);
b) providing a plurality of second sheet-shaped partitioning elements (14), each second partitioning element (14) having a plurality of vertical slits (16), which extend transversely from a respective first edge (14a) of each second partitioning element (14);
c) arranging the first partitioning elements (12) on a work surface, spaced from each other so that the distance between two successive first partitioning elements (12) of the plurality of first partitioning elements (12) is not constant, and so that a second edge (12b) of each first partitioning element (12), opposite to said first edge (12a) of each first partitioning element (12), rests on said work surface; and
d) arranging the second partitioning elements (14) on the first partitioning elements (12), transversely thereto, so that each vertical slit (16) of the plurality of vertical slits (16) of the second partitioning elements (14) interlocks with a respective vertical slit (16) of the plurality of vertical slits (16) of a respective first partitioning element (12), so that the first partitioning elements (12) and the second partitioning elements (14) define between them a plurality of cells (26), each cell (26) being delimited laterally by a pair of opposing first partitioning elements (12) and a pair of opposing second partitioning elements (14).

2. The method according to claim 1, wherein the first partitioning elements (12) further have a plurality of transverse slits (22) extending along a direction transverse to the plurality of vertical slits (16) of the first partitioning elements (12), the method further comprising the step of:
e) arranging respective horizontal partitioning elements (24), preferably made of flexible material, through a pair of transverse slits (22) of a respective pair of successive first partitioning elements (12).

3. The method according to claim 1 or claim 2,
wherein step a) of providing the first partitioning elements (12) comprises the sub-step of:
f1) making at least a portion of surface of at least one of the first partitioning elements (12) microporous or microdrilled by means of a micro drilling method, preferably by means of a laser; and/or
wherein step b) of providing the second partitioning elements (14) comprises the sub-step of:
f2) making at least a portion of surface of at least one of the second partitioning elements (14) microporous or microdrilled by a microdrilling method, preferably by means of a laser.

4. The method according to any of the preceding claims,
wherein step a) of providing the first partitioning elements (12) comprises the sub-step of:
g1) manufacturing the first partitioning elements (12) from sheets having a thickness between about 20 and about 300 micrometers by means of a punching or die-cutting method; and/or
wherein step b) of providing the second partitioning elements (14) comprises the sub-step of:
g2) manufacturing the second partitioning elements (14), by means of a punching or die-cutting method, from sheets having a thickness between about 20 and about 300 micrometers.

5. The method according to any of the preceding claims, further comprising the step of: h) following step d), strengthening the assembly formed by the first partitioning elements (12) and the second partitioning elements (14) by resin immersion, preferably epoxy or phenolic resin, of the assembly formed by the first partitioning elements (12) and the second partitioning elements (14) and its subsequent curing.

6. A manufacturing method for manufacturing a sound-absorbing panel (100) with sandwich structure for noise reduction in an aircraft, comprising the steps of:
x1) carrying out a manufacturing method for manufacturing a core (10) according to any of the preceding claims;
x2) arranging said core (10) obtained in step x1) on a first skin (102) so that the second edge (12b) of each first partitioning element (12) rests on said first skin (102);
x3) arranging a second skin (104) on the core (10) so that a second edge (14b) of each second partitioning element (14), opposite to said first edge (14a) of each second partitioning element (14), is in contact with the second skin (104).

7. The method according to any of the preceding claims, **characterized in that** step x2) follows step x3).

8. The method according to claim 6 or claim 7, further comprising the steps of:
y1) arranging a layer of structural adhesive between the second edge (12b) of each first partitioning element (12) and the first skin (102); and/or
y2) arranging a layer of structural adhesive between the second edge (14b) of each second partitioning element (14) and the second skin (104).

9. The method according to any of claims 6 through 8, further comprising the step of:
z1) making the first partitioning elements (12) integral with the first skin (102) by heat welding; and/or
z2) making the second partitioning elements (14) integral with the first partitioning elements (12) by heat welding; and/or
z3) making the second skin (104) integral with the second partitioning elements (14) by heat welding.

10. A core (10) for a sound-absorbing panel (100) having sandwich structure for noise reduction in an aircraft, the core (100) comprising:
- a plurality of first sheet-shaped partitioning elements (12), each first partitioning element (12) having a plurality of vertical slits (16), which extend transversely from a respective first edge (12a) of each first partitioning element (12); the first partitioning elements (12) being arranged spaced from each other so that the distance between two successive first partitioning elements (12) of the plurality of first partitioning elements (12) is not constant; and
- a plurality of second sheet-shaped partitioning elements (14), each second partitioning element (14) having a plurality of vertical slits (16), said slits extending transversely from a respective first edge (14a) of each second partitioning element (14); the second partitioning elements (14) being arranged on the first partitioning elements (12), transversely thereto, so that each vertical slit (16) of the plurality of vertical slits (16) of the second partitioning elements (14) interlocks with a respective vertical slit (16) of the plurality of vertical slits (16) of a respective first partitioning element (12), so that the first partitioning elements (12) and the second partitioning elements (16) define between them a plurality of cells (26), each cell (26) being delimited laterally by a pair of opposing first partitioning elements (12) and a pair of opposing second partitioning elements (14).

11. The core according to claim 10, wherein the first partitioning elements (12) further have a plurality of transverse slits (22) extending along a direction transverse to the plurality of vertical slits (16) of the first partitioning elements (12), and wherein the core (10) further comprises respective horizontal partitioning elements (24), preferably made of flexible material, arranged through a pair of transverse slits (22) of a respective pair of successive first partitioning elements (12).

12. The core according to claim 11, wherein the plurality of transverse slits (22) is distributed according to an asymmetrical pattern on each first partitioning element (12), and wherein the plurality of transverse slits (22) is distributed according to the same pattern on each first partitioning element (12).

13. The core according to any of claims 10 to 12, wherein the first partitioning elements (12) additionally have a plurality of first openings (18) adapted to connect adjacent cells (26) of said plurality of cells (26) and/or wherein the second partitioning elements (12) additionally have a plurality of second openings (28) adapted to connect adjacent cells (26) of said plurality of cells (26).

14. The core according to claim 13, further comprising at least one microporous or microdrilled membrane (20) arranged to at least partially close at least one of said first or second openings (18; 28).

15. The core according to any of claims 10 to 14, wherein the distance between two successive vertical slits (16) of the plurality of vertical slits (16) of each first partitioning element (12) is not constant.

16. A sound-absorbing panel (100) with sandwich structure for noise reduction in an aircraft, the panel (100) comprising:
- a first skin (102) that is at least partially acoustically permeable;
- a core (10) according to any of claims 10 to 15, arranged on the first skin (102) so that a second edge (12b) of each first partitioning element (12), opposite to said first edge (12a) of each first partitioning element (12), rests on said first skin (102); and
- a second skin (104), arranged on the core (10) in that a second edge (14b) of each second partitioning element (14), opposite to said first edge (14a) of each second partitioning element (14), is in contact with the second skin (104).

17. The panel according to claim 16, wherein the first skin (102) extends over a surface having single or double curvature.

## Patentansprüche

1. Verfahren zur Herstellung eines Kerns (10) für eine schallabsorbierende Platte (100) mit Sandwichstruktur zur Geräuschminderung in einem Flugzeug, wobei das Verfahren die folgenden Schritte umfasst:
a) Bereitstellen einer Vielzahl von ersten plattenförmigen Trennungselementen (12), wobei jedes erste Trennungselement (12) eine Vielzahl von vertikalen Schlitzen (16) aufweist, die sich quer von einem jeweiligen ersten Rand (12a) jedes ersten Trennungselements (12) erstrecken;
b) Bereitstellen einer Vielzahl von zweiten plattenförmigen Trennungselementen (14), wobei jedes zweite Trennungselement (14) eine Vielzahl von vertikalen Schlitzen (16) aufweist, die sich quer von einem jeweiligen ersten Rand (14a) jedes zweiten Trennungselements (14) erstrecken;
c) Anordnen der ersten Trennungselemente (12) auf einer Arbeitsfläche, wobei sie voneinander beabstandet sind, sodass der Abstand zwischen zwei aufeinanderfolgenden ersten Trennungselementen (12) der Vielzahl der ersten Trennungselemente (12) nicht konstant ist, und sodass ein zweiter Rand (12b) jedes ersten Trennungselements (12), der dem ersten Rand (12a) gegenüberliegt, auf der Arbeitsfläche aufliegt;
d) Anordnen der zweiten Trennungselemente (14) auf den ersten Trennungselementen (12), quer dazu, sodass jeder vertikale Schlitz (16) der Vielzahl von vertikalen Schlitzen (16) der zweiten Trennungselemente (14) mit einem jeweiligen vertikalen Schlitz (16) der Vielzahl von vertikalen Schlitzen (16) eines jeweiligen ersten Trennungselements (12) verbunden ist, sodass die ersten Trennungselemente (12) und die zweiten Trennungselemente (14) zwischen ihnen eine Vielzahl von Zellen (26) definieren, wobei jede Zelle (26) seitlich durch ein Paar von ersten gegenüberliegenden Trennungselementen (12) und ein Paar von zweiten gegenüberliegenden Trennungselementen (14) begrenzt wird.

2. Verfahren nach Anspruch 1, wobei die ersten Trennungselemente (12) ferner eine Vielzahl von Querschlitzen (22) aufweisen, die sich in einer Richtung quer zu der Vielzahl von vertikalen Schlitzen (16) der ersten Trennungselemente (12) erstrecken, wobei das Verfahren ferner den Schritt umfasst:
e) Anordnen jeweiliger horizontalen Trennungselementen (24), die vorzugsweise aus flexiblem Material bestehen, durch ein Paar von Querschlitzen (22) eines jeweiligen Paares aufeinanderfolgender erster Trennungselemente (12).

3. Verfahren nach Anspruch 1 oder Anspruch 2,
wobei Schritt a) des Bereitstellens der ersten Trennungselemente (12) den Unterschritt umfasst:
f1) Machen mindestens eines Abschnitts der Oberfläche von mindestens einem der ersten Trennungselemente (12) feinporig oder mikroperforiert durch ein Mikroperforationsverfahren, vorzugsweise mittels Laser; und/oder
wobei Schritt b) des Bereitstellens der zweiten Trennungselemente (14) den Unterschritt umfasst:
f2) Machen mindestens eines Abschnitts der Oberfläche von mindestens einem der zweiten Trennungselemente (14) feinporig oder mikroperforiert durch ein Mikroperforationsverfahren, vorzugsweise mittels Laser.

4. Verfahren nach einem der vorangehenden Ansprüche,
wobei Schritt a) des Bereitstellens der ersten Trennungselemente (12) den Unterschritt umfasst:
g1) Herstellen der ersten Trennungselemente (12) aus Platten aufweisend eine Dicke zwischen etwa 20 und etwa 300 Mikrometern durch ein Stanz- oder Schneidverfahren;
und/oder
wobei Schritt b) des Bereitstellens der zweiten Trennungselemente (14) den Unterschritt umfasst:
g2) Herstellen der zweiten Trennungselemente (14) durch ein Stanz- oder Schneidverfahren aus Platten aufweisend eine Dicke zwischen etwa 20 und etwa 300 Mikrometern.

5. Verfahren nach einem der vorangehenden Ansprüche, ferner umfassend den Schritt:
h) Nach Schritt d) Verstärken der Baugruppe, die durch die ersten Trennungselemente (12) und die zweiten Trennungselemente (14) gebildet wird, durch Harzimprägnierung, vorzugsweise mit Epoxid- oder Phenolharz, der Baugruppe, die durch die ersten Trennungselemente (12) und die zweiten Trennungselemente (14) gebildet wird und deren anschließende Aushärtung.

6. Verfahren zur Herstellung einer schallabsorbierenden Platte (100) mit Sandwichstruktur zur Geräuschminderung in einem Flugzeug, umfassend die folgenden Schritte:
x1) Durchführen eines Verfahrens zur Herstellung eines Kerns (10) nach einem der vorangehenden Ansprüche;
x2) Anordnen des in Schritt x1) erreichten Kerns (10) auf einem ersten Mantel (102), sodass der zweite Rand (12b) jedes ersten Trennungselements (12) auf dem ersten Mantel (102) aufliegt;
x3) Anordnen eines zweiten Mantels (104) auf dem Kern (10), sodass ein zweiter Rand (14b) jedes zweiten Trennungselements (14), die dem ersten Rand (14a) des jeweiligen zweiten Trennungselements (14) gegenüberliegt, mit dem zweiten Mantel (104) in Kontakt steht.

7. Verfahren nach einem der vorangehenden Ansprüche, **dadurch gekennzeichnet, dass** Schritt x2) Schritt x3) folgt.

8. Verfahren nach Anspruch 6 oder Anspruch 7, ferner umfassend die folgenden Schritte:
y1) Anordnen einer Schicht aus strukturellem Klebstoff zwischen dem zweiten Rand (12b) jedes ersten Trennungselements (12) und dem ersten Mantel (102); und/oder
y2) Anordnen einer Schicht aus strukturellem Klebstoff zwischen dem zweiten Rand (14b) jedes zweiten Trennungselements (14) und dem zweiten Mantel (104).

9. Verfahren nach einem der Ansprüche 6 bis 8, ferner umfassend den Schritt:
z1) Machen der ersten Trennungselemente (12) einstückig mit dem ersten Mantel (102) durch thermisches Schweißen; und/oder
z2) Machen der zweiten Trennungselemente (14) einstückig mit den ersten Trennungselementen (12) durch thermisches Schweißen; und/oder
z3) Machen des zweiten Mantels (104) einstückig mit den zweiten Trennungselementen (14) durch thermisches Schweißen.

10. Kern (10) für eine schallabsorbierende Platte (100) aufweisend eine Sandwichstruktur zur Geräuschminderung in einem Flugzeug, wobei der Kern (10) umfasst:
eine Vielzahl von ersten plattenförmigen Trennungselementen (12), wobei jedes erste Trennungselement (12) eine Vielzahl von vertikalen Schlitzen (16) aufweist, die sich quer von einem jeweiligen ersten Rand (12a) jedes ersten Trennungselements (12) erstrecken; wobei die ersten Trennungselemente (12) beabstandet voneinander angeordnet sind, sodass der Abstand zwischen zwei aufeinanderfolgenden ersten Trennungselementen (12) der Vielzahl der ersten Trennungselemente (12) nicht konstant ist; und
eine Vielzahl von zweiten plattenförmigen Trennungselementen (14), wobei jedes zweite Trennungselement (14) eine Vielzahl von vertikalen Schlitzen (16) aufweist, wobei die Schlitze sich quer von einem jeweiligen ersten Rand (14a) jedes zweiten Trennungselements (14) erstrecken; wobei die zweiten Trennungselemente (14) auf den ersten Trennungselementen (12) quer dazu angeordnet sind, sodass jeder vertikale Schlitz (16) der Vielzahl von vertikalen Schlitzen (16) der zweiten Trennungselemente (14) mit einem jeweiligen vertikalen Schlitz (16) der Vielzahl von vertikalen Schlitzen (16) eines jeweiligen ersten Trennungselements (12) verbunden ist, sodass die ersten Trennungselemente (12) und die zweiten Trennungselemente (16) zwischen ihnen eine Vielzahl von Zellen (26) definieren, wobei jede Zelle (26) seitlich durch ein Paar von ersten gegenüberliegenden Trennungselementen (12) und ein Paar von zweiten gegenüberliegenden Trennungselementen (14) begrenzt wird.

11. Kern nach Anspruch 10, wobei die ersten Trennungselemente (12) ferner eine Vielzahl von Querschlitzen (22) aufweisen, die sich in einer Richtung quer zur Vielzahl von vertikalen Schlitzen (16) der ersten Trennungselemente (12) erstrecken, und wobei der Kern (10) ferner entsprechende horizontale Trennungselementelemente (24) umfasst, die vorzugsweise aus flexiblem Material bestehen, die durch ein Paar von Querschlitzen (22) eines jeweiligen Paares aufeinanderfolgender erster Trennungselemente (12) angeordnet sind.

12. Kern nach Anspruch 11, wobei die Vielzahl von Querschlitzen (22) nach einem asymmetrischen Muster auf jedem ersten Trennungselement (12) verteilt ist, und wobei die Vielzahl von Querschlitzen (22) nach demselben Muster auf jedem ersten Trennungselement (12) verteilt ist.

13. Kern nach einem der Ansprüche 10 bis 12, wobei die ersten Trennungselemente (12) zusätzlich eine Vielzahl von ersten Öffnungen (18) aufweisen, die eingerichtet sind, benachbarte Zellen (26) der Vielzahl von Zellen (26) zu verbinden, und/oder wobei die zweiten Trennungselemente (12) zusätzlich eine Vielzahl von zweiten Öffnungen (28) aufweisen, die eingerichtet sind, benachbarte Zellen (26) der Vielzahl von Zellen (26) zu verbinden.

14. Kern nach Anspruch 13, ferner umfassend mindestens eine feinporige oder mikroperforierte Membran (20), die eingerichtet ist, mindestens eine der ersten oder zweiten Öffnungen (18; 28) teilweise zu verschließen.

15. Kern nach einem der Ansprüche 10 bis 14, wobei der Abstand zwischen zwei aufeinanderfolgenden vertikalen Schlitzen (16) der Vielzahl von vertikalen Schlitzen (16) jedes ersten Trennungselements (12) nicht konstant ist.

16. Schallabsorbierende Platte (100) mit Sandwichstruktur zur Geräuschminderung in einem Flugzeug, wobei die Platte (100) umfasst:
ein erster Mantel (102), der mindestens teilweise akustisch durchlässig ist;
einen Kern (10) nach einem der Ansprüche 10 bis 15, der auf dem ersten Mantel (102) angeordnet ist, sodass der zweite Rand (12b) jedes ersten Trennungselements (12), der dem ersten Rand (12a) jedes ersten Trennungselements (12) gegenüberliegt, auf dem ersten Mantel (102) aufliegt; und
ein zweiter Mantel (104), der auf dem Kern (10) angeordnet ist, sodass ein zweiter Rand (14b) jedes zweiten Trennungselements (14), der dem ersten Rand (14a) jedes zweiten Trennungselements (14) gegenüberliegt, mit dem zweiten Mantel (104) in Kontakt steht.

17. Tafel nach Anspruch 16, wobei der erste Mantel (102) sich über eine Oberfläche aufweisend eine einzelne oder doppelte Krümmung erstreckt.

## Revendications

1. Procédé de fabrication d'une âme (10) pour un panneau insonorisant (100) à structure sandwich pour la réduction du bruit dans un aéronef, le procédé comprenant les étapes de:
a) prévoir une pluralité de premiers éléments de cloisonnement (12) en forme de feuille, chaque premier élément de cloisonnement (12) ayant une pluralité de fentes verticales (16) qui s'étendent transversalement à partir d'un premier bord respectif (12a) de chaque premier élément de cloisonnement (12);
b) prévoir une pluralité de seconds éléments de cloisonnement (14) en forme de feuille, chaque second élément de cloisonnement (14) ayant une pluralité de fentes verticales (16) qui s'étendent transversalement à partir d'un premier bord respectif (14a) de chaque second élément de cloisonnement (14);
c) disposer les premiers éléments de cloisonnement (12) sur une surface de travail, espacés les uns des autres de sorte que la distance entre deux premiers éléments de cloisonnement (12) successifs de la pluralité des premiers éléments de cloisonnement (12) ne soit pas constante, et de sorte qu'un second bord (12b) de chaque premier élément de cloisonnement (12), opposé audit premier bord (12a) de chaque premier élément de cloisonnement (12), repose sur ladite surface de travail; et
d) disposer les seconds éléments de cloisonnement (14) sur les premiers éléments de cloisonnement (12), transversalement à ceux-ci, de sorte que chaque fente verticale (16) de la pluralité de fentes verticales (16) des seconds éléments de cloisonnement (14) s'emboîte avec une fente verticale respective (16) de la pluralité de fentes verticales (16) d'un premier élément de cloisonnement respectif (12), de telle sorte que les premiers éléments de cloisonnement (12) et les seconds éléments de cloisonnement (14) définissent entre eux une pluralité de cellules (26), chaque cellule (26) étant délimitée latéralement par une paire opposée de premiers éléments de cloisonnement (12) et une paire opposée de seconds éléments de cloisonnement (14).

2. Procédé selon la revendication 1, dans lequel les premiers éléments de cloisonnement (12) comportent en outre une pluralité de fentes transversales (22) s'étendant dans une direction transversale par rapport à la pluralité de fentes verticales (16) des premiers éléments de cloisonnement (12), le procédé comprenant en outre l'étape de:
e) disposer des éléments de cloisonnement horizontaux respectifs (24), de préférence en matériau flexible, à travers une paire de fentes transversales (22) d'une paire respective de premiers éléments de cloisonnement (12) successifs.

3. Procédé selon la revendication 1 ou la revendication 2,
dans lequel l'étape a) de prévoir les premiers éléments de cloisonnement (12) comprend l'étape secondaire de:
f1) rendre au moins une partie de la surface d'au moins un des premiers éléments de cloisonnement (12) microporeuse ou microperforée par un procédé de microperforation, de préférence par laser; et/ou
dans lequel l'étape b) de prévoir les seconds éléments de cloisonnement (14) comprend l'étape secondaire de:
f2) rendre au moins une partie de la surface d'au moins un des seconds éléments de cloisonnement (14) microporeuse ou microperforée par un procédé de microperforation, de préférence par laser.

4. Procédé selon l'une quelconque des revendications précédentes,
dans lequel l'étape a) de prévoir les premiers éléments de cloisonnement (12) comprend l'étape secondaire de:
g1) fabriquer les premiers éléments de cloisonnement (12) à partir de feuilles ayant une épaisseur comprise entre environ 20 et environ 300 micromètres, par un procédé de poinçonnage ou de découpe; et/ou
dans lequel l'étape b) de prévoir les seconds éléments de cloisonnement (14) comprend l'étape secondaire de:
g2) fabriquer les seconds éléments de cloisonnement (14), par un procédé de poinçonnage ou de découpe, à partir de feuilles ayant une épaisseur comprise entre environ 20 et environ 300 micromètres.

5. Procédé selon l'une quelconque des revendications précédentes, comprenant en outre l'étape de:
h) après l'étape d), renforcer l'assemblage formé par les premiers éléments de cloisonnement (12) et les seconds éléments de cloisonnement (14) par immersion dans une résine, de préférence une résine époxy ou phénolique, de l'assemblage formé par les premiers éléments de cloisonnement (12) et les seconds éléments de cloisonnement (14), et sa polymérisation ultérieure.

6. Procédé de fabrication d'un panneau insonorisant (100) à structure sandwich pour la réduction du bruit dans un aéronef, comprenant les étapes de:
x1) réaliser un procédé de fabrication d'une âme (10) selon l'une quelconque des revendications précédentes;
x2) disposer ladite âme (10) obtenue à l'étape x1) sur une première peau (102) de sorte que le second bord (12b) de chaque premier élément de cloisonnement (12) repose sur ladite première peau (102);
x3) disposer une seconde peau (104) sur l'âme (10) de sorte qu'un second bord (14b) de chaque second élément de cloisonnement (14), opposé audit premier bord (14a) de chaque second élément de cloisonnement (14), soit en contact avec la seconde peau (104).

7. Procédé selon l'une quelconque des revendications précédentes, **caractérisé en ce que** l'étape x2) suit l'étape x3).

8. Procédé selon la revendication 6 ou la revendication 7, comprenant en outre les étapes de:
y1) disposer une couche d'adhésif structurel entre le second bord (12b) de chaque premier élément de cloisonnement (12) et la première peau (102); et/ou
y2) disposer une couche d'adhésif structurel entre le second bord (14b) de chaque second élément de cloisonnement (14) et la seconde peau (104).

9. Procédé selon l'une quelconque des revendications 6 à 8, comprenant en outre l'étape de:
z1) rendre solidaires les premiers éléments de cloisonnement (12) et la première peau (102) par soudage thermique; et/ou
z2) rendre solidaires les seconds éléments de cloisonnement (14) et les premiers éléments de cloisonnement (12) par soudage thermique; et/ou
z3) rendre solidaires la seconde peau (104) et les seconds éléments de cloisonnement (14) par soudage thermique.

10. Une âme (10) pour un panneau insonorisant (100) à structure sandwich pour la réduction du bruit dans un aéronef, l'âme (10) comprenant:
une pluralité de premiers éléments de cloisonnement (12) en forme de feuille, chaque premier élément de cloisonnement (12) ayant une pluralité de fentes verticales (16) qui s'étendent transversalement à partir d'un premier bord respectif (12a) de chaque premier élément de cloisonnement (12); les premiers éléments de cloisonnement (12) étant disposés espacés les uns des autres de sorte que la distance entre deux premiers éléments de cloisonnement (12) successifs de la pluralité des premiers éléments de cloisonnement (12) ne soit pas constante; et
une pluralité de seconds éléments de cloisonnement (14) en forme de feuille, chaque second élément de cloisonnement (14) ayant une pluralité de fentes verticales (16), lesdites fentes s'étendant transversalement à partir d'un premier bord respectif (14a) de chaque second élément de cloisonnement (14); les seconds éléments de cloisonnement (14) étant disposés sur les premiers éléments de cloisonnement (12), transversalement à ceux-ci, de sorte que chaque fente verticale (16) de la pluralité de fentes verticales (16) des seconds éléments de cloisonnement (14) s'emboîte avec une fente verticale respective (16) de la pluralité de fentes verticales (16) d'un premier élément de cloisonnement respectif (12), de telle sorte que les premiers éléments de cloisonnement (12) et les seconds éléments de cloisonnement (16) définissent entre eux une pluralité de cellules (26), chaque cellule (26) étant délimitée latéralement par une paire opposée de premiers éléments de cloisonnement (12) et une paire opposée de seconds éléments de cloisonnement (14).

11. Âme selon la revendication 10, dans laquelle les premiers éléments de cloisonnement (12) comportent en outre une pluralité de fentes transversales (22) s'étendant selon une direction transversale par rapport à la pluralité de fentes verticales (16) des premiers éléments de cloisonnement (12), et dans laquelle l'âme (10) comprend en outre des éléments de cloisonnement horizontaux respectifs (24), de préférence en matériau flexible, disposés à travers une paire de fentes transversales (22) d'une paire respective de premiers éléments de cloisonnement (12) successifs.

12. Âme selon la revendication 11, dans laquelle la pluralité de fentes transversales (22) est répartie selon un motif asymétrique sur chaque premier élément de cloisonnement (12), et dans laquelle la pluralité de fentes transversales (22) est répartie selon le même motif sur chaque premier élément de cloisonnement (12).

13. Âme selon l'une quelconque des revendications 10 à 12, dans laquelle les premiers éléments de cloisonnement (12) comportent en outre une pluralité de premières ouvertures (18) adaptées à relier des cellules adjacentes (26) de ladite pluralité de cellules (26) et/ou dans laquelle les seconds éléments de cloisonnement (12) comportent en outre une pluralité de secondes ouvertures (28) adaptées à relier des cellules adjacentes (26) de ladite pluralité de cellules (26).

14. Âme selon la revendication 13, comprenant en outre au moins une membrane microporeuse ou microperforée (20) disposée de manière à obturer au moins partiellement au moins l'une desdites premières ou secondes ouvertures (18; 28).

15. Âme selon l'une quelconque des revendications 10 à 14, dans laquelle la distance entre deux fentes verticales (16) successives de la pluralité de fentes verticales (16) de chaque premier élément de cloisonnement (12) n'est pas constante.

16. Un panneau insonorisant (100) à structure sandwich pour la réduction du bruit dans un aéronef, le panneau (100) comprenant:
une première peau (102) au moins partiellement perméable acoustiquement;
une âme (10) selon l'une quelconque des revendications 10 à 15, disposée sur la première peau (102) de sorte que le second bord (12b) de chaque premier élément de cloisonnement (12), opposé audit premier bord (12a) de chaque premier élément de cloisonnement (12), repose sur ladite première peau (102); et
une seconde peau (104), disposée sur l'âme (10) de sorte qu'un second bord (14b) de chaque second élément de cloisonnement (14), opposé audit premier bord (14a) de chaque second élément de cloisonnement (14), soit en contact avec la seconde peau (104).

17. Panneau selon la revendication 16, dans lequel la première peau (102) s'étend sur une surface présentant une courbure simple ou double.
